# FASCICULE DE BREVET EUROPEEN

(11) **EP 1 036 770 B1**
(45) Date de publication et mention de la délivrance du brevet: **04.09.2002**
(21) Numéro de dépôt: 00390007.3
(22) Date de dépôt: 15.03.2000
(51) Int. Cl.: C02F 3/04

(54) **Station d'epuration**
Abwasserbehandlungsanlage
Waste water treatment plant

(30) Priorité: 15.03.1999 FR 9903141
(43) Date de publication de la demande: 20.09.2000
(73) Titulaire: Naves TP Sarl, 12170 Requista (FR)
(72) Inventeur: Naves, Jean-Paul, 12170 Requista (FR)
(74) Mandataire: Ravina, Bernard

(56) Documents cités:
- EP-A- 0 601 551
- DE-U- 8 522 864
- FR-A- 421 590
- FR-A- 2 755 620
- GB-A- 553 125
- US-A- 2 366 522

## Description

La présente invention concerne une station d'épuration utilisant le principe des filtres à sables. Ce type de station consiste à épandre les flux souillés sur une surface filtrante et à collecter les flux filtrés par un réseau de collecte. Les flux sont répartis sur la surface filtrante par des drains constitués généralement de tuyaux fendus radialement par lesquels s'écoule l'eau souillée.

Le problème généralement posé par ce type de station vient du fait que les flux ne sont pas répartis sur toute la surface filtrante de manière homogène et qu'ainsi la masse filtrante se trouve, à certains endroits, saturée en impuretés rendant l'épuration très médiocre. En général, la totalité des effluents se trouve déversée par les premiers mètres de drains d'épandage, saturant ainsi la masse filtrante située à cet endroit et rendant inutile le reste de la surface filtrante. D'autre part, une mauvaise répartition des flux dans l'ensemble du réseau d'épandage accentue ce phénomène, en effet, certaines branches du réseau, où l'écoulement est plus facile que pour les autres, drainent la quasi-totalité des effluents rendant inopérantes les autres branches du réseau.

Par exemple, il a été proposé par le brevet FR 2.755.620 (Jean VOISIN SA) d'organiser une installation visant à répartir des eaux usées sur une surface filtrante, en un réseau de conduites de répartition reliées à une canalisation principale d'alimentation. Les extrémités libres d'une pluralité de ces conduites de répartition sont regroupées pour être reliées entre elles par un drain.

L'invention a pour objet d'obvier à ces inconvénients en proposant une station d'épuration dans laquelle les effluents sont parfaitement répartis sur toute la surface filtrante.

A cet effet, l'invention propose une station d'épuration du genre de celles comprenant une masse filtrante située entre au moins un réseau de drainage supérieur et un réseau de collecte inférieur. Ce réseau de drainage comprend une conduite de chasse amenant les effluents vers un regard de dérivation, pour répartir les effluents vers des branches d'évacuation qui se dirigent chacune vers un diviseur d'effluent qui répartit équitablement le flux vers des regards de répartition sur l'ensemble du réseau d'épandage supérieur constitué de drains parallèles les uns aux autres.
La station d'épuration de la présente invention est principalement caractérisée en ce qu'elle met en oeuvre au moins un regard de répartition permettant une répartition homogène des flux depuis une arrivée d'effluent vers plusieurs sorties d'effluents reliées chacune à un drain.

Selon une autre caractéristique de l'invention, la station d'épuration met en oeuvre un regard de dérivation permettant d'orienter alternativement le flux vers l'une des branches d'épandage.

Selon une autre caractéristique de l'invention, la station d'épuration met en oeuvre des diviseurs d'effluents permettant de répartir équitablement un flux d'entrée vers plusieurs sorties.

Selon une autre caractéristique de l'invention, les drains d'épandage sont mis en place de manière à ce que le flux souillé se déverse de manière homogène sur toute la longueur d'épandage, à cet effet l'axe d'orientation des fentes des drains d'épandage s'incline progressivement vers le bas dans le sens du flux.

D'autres avantages et caractéristiques de l'invention apparaîtront à la lecture de la description ci-après de formes de réalisation de l'invention données à titre d'exemples non limitatifs et illustrés par les dessins joints dans lesquels:
- La figure 1 représente en vue de dessus la station d'épuration, la partie gauche du dessin représente les drains d'épandage et la partie droite les drains de collecte situés sous les drains d'épandage non représentés sur cette partie du dessin.
- La figure 2 représente le regard de dérivation en coupe vue de face.
- La figure 3 représente un regard de répartition en vue de dessus.
- La figure 4 représente un regard de répartition en coupe vue de coté.
- Les figures 5A, 5B et 5C représentent les différentes plaques permettant la répartition homogène du flux dans tous les drains.
- La figure 6 représente le mode de positionnement des fentes des drains pour permettre un écoulement régulier sur toute la longueur.

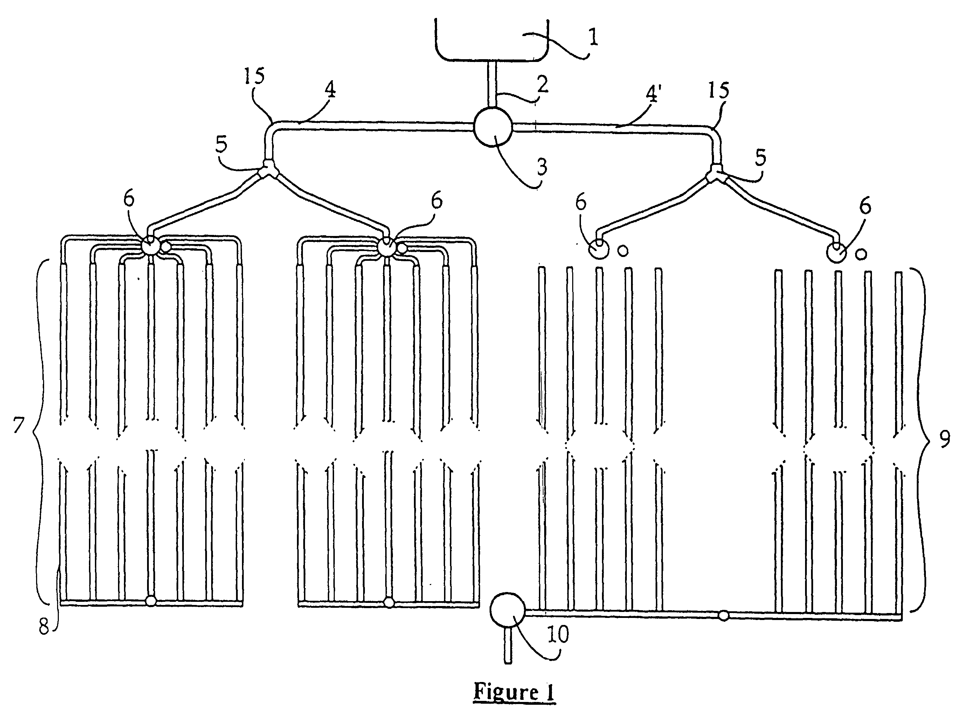

Comme on peut le voir sur la figure 1, la station d'épuration est disposée en aval d'une chasse (1). Les effluents arrivent par la conduite de chasse (2) vers le regard de dérivation (3). Le regard de dérivation a pour rôle de répartir les effluents vers l'une des branches d'évacuation (4) ou (4'). Chaque branche d'évacuation (4) se dirige vers un diviseur d'effluents (5) qui répartis équitablement le flux vers les regards de répartition (6). Les regards de répartition répartissent à leur tour de manière homogène les effluents sur l'ensemble du réseau d'épandage. Le réseau d'épandage supérieur (7) est constitué de drains d'épandage (8) parallèles les uns aux autres. Le réseau de collecte inférieur (9) est situé sous le réseau d'épandage (7). Une masse filtrante est disposée entre le réseau d'épandage et le réseau de collecte, cette masse filtrante est par exemple constituée de gravier et de sable selon des techniques de filtrage parfaitement connues dans le domaine de l'épuration de l'eau. Les drains sont constitués par des tuyaux fendus radialement selon un même axe afin de permettre l'écoulement de l'eau. L'eau collectée et épurée est évacuée vers un regard de collecte (10).

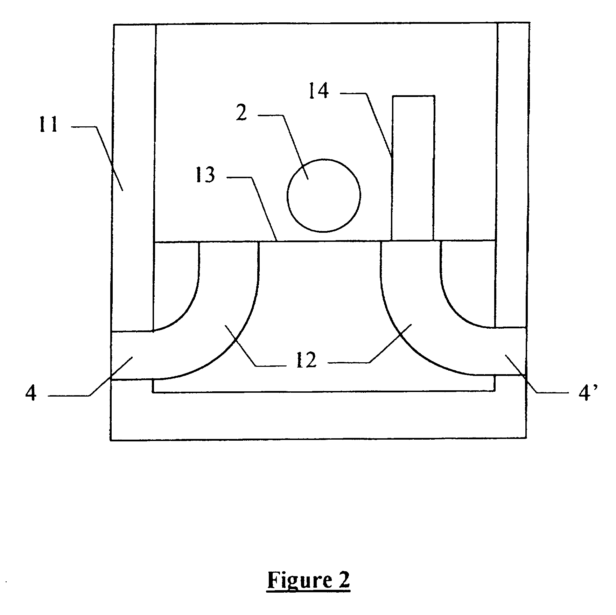

Comme on peut le voir sur la figure 2, le regard de dérivation est constitué d'un coffrage bétonné (11), pouvant être un regard préfabriqué, dans lequel débouche la conduite de chasse (2). La conduite de chasse débouche horizontalement dans le regard. Le flux est réparti alternativement dans l'une des branches d'évacuation (4) ou (4') perpendiculaires à la conduite de chasse (2). Les sorties d'évacuation peuvent être constituées par des coudes (12) dont une extrémité affleure le fond (13) du regard et dont l'autre extrémité débouche horizontalement vers les branches d'évacuation (4) et (4'). Afin d'obliger le flux à s'orienter vers l'une des branches, un tube d'obturation (14) peut être positionné sur l'une des sorties d'évacuation. Ce tube peut régulièrement être déplacé manuellement de manière à ce que l'une des parties de la masse filtrante soit utilisée pendant que l'autre se stabilise, on évite ainsi la saturation de la masse filtrante. Les formes de réalisation du regard de dérivation sont nombreuses. Les sorties d'évacuation peuvent également être constituées par des tubes horizontaux, le tube d'obturation aura dans ce cas une forme coudée à son extrémité inférieure.

Les branches d'évacuations (4) et (4') dirigent le flux vers les diviseurs d'effluents (5). Les différentes canalisations de la station sont horizontales, c'est la pression du flux qui le fait s'écouler dans l'installation. Tel que représenté sur la figure 1, les branches d'évacuation (4) et (4') forment un coude (15) entre le regard de dérivation (3) et le diviseur d'effluent (5). Pour permettre une répartition homogène des effluents à travers le diviseur (5), il est préférable de laisser une certaine distance en ligne droite entre le coude (15) et le diviseur d'effluents (5). En effet, en passant par le coude, les effluents forment un flux turbulent qu'il est nécessaire de stabiliser pour obtenir une répartition homogène dans les deux branches du diviseur d'effluent. A titre d'exemple cette distance peut être de l'ordre de 1 à 2 mètres pour une distance de 10 m entre le regard de dérivation et le coude. Le diviseur d'effluent (5) répartit les flux vers les regards de répartition (6). Chaque diviseur d'effluent (5) est constitué d'une branche d'arrivée et de deux branches de sorties. Chaque branche de sortie doit avoir le même décalage angulaire par rapport à l'axe d'arrivée. Tel que représenté sur la figure 1, les trois branches du diviseur d'effluents (5) sont décalées de 120° les unes par rapport aux autres.

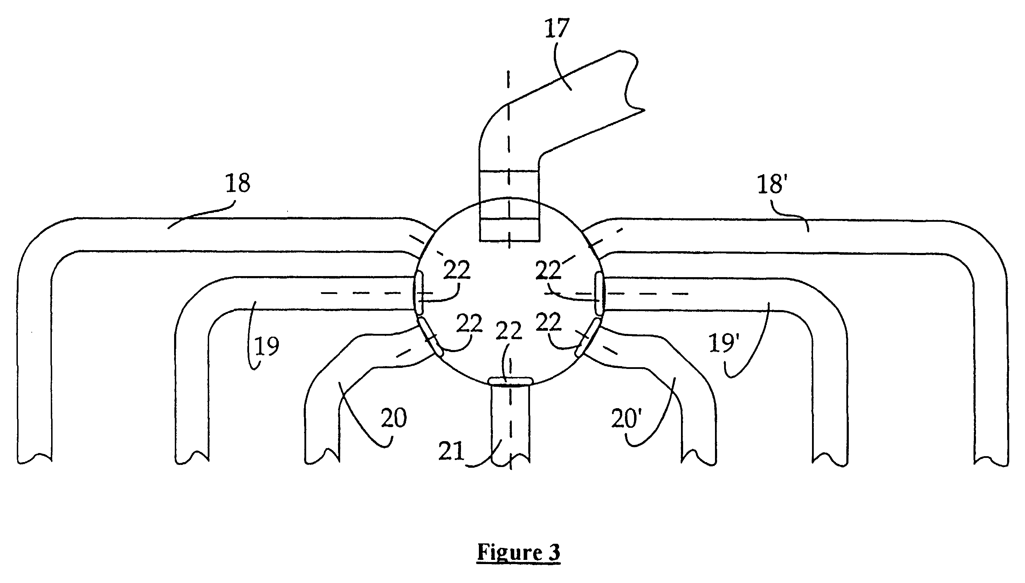

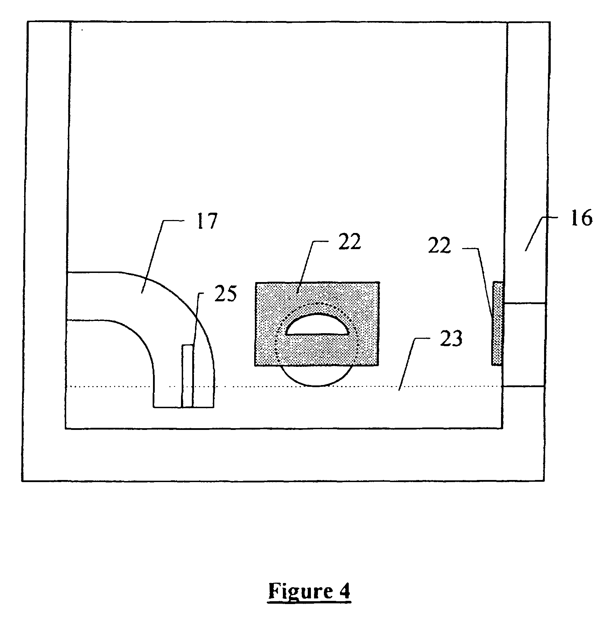

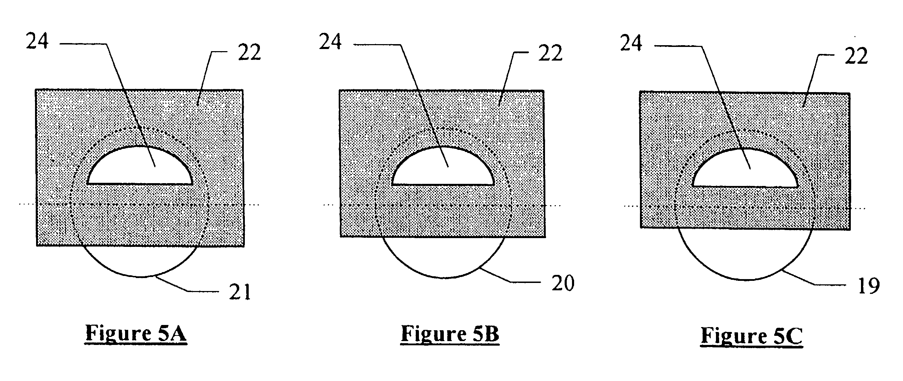

Tel que représenté sur les figures 3 et 4, chaque regard de répartition est constitué d'une section de tube en PVC par exemple (16), d'une arrivée d'effluents (17) et de plusieurs sorties d'effluents (18 à 21 et 18' à 20'). L'arrivée d'effluent est constituée par un coude plongeur venant déverser les effluents sous le niveau minimum d'eau (23). Pour éviter les problèmes dus au gel, le coude plongeur peut être doté d'une fente verticale (25) s'étendant au-dessus du niveau minimum (23). Ainsi, les effluents peuvent s'évacuer même si l'eau est gelée jusqu'au niveau (23).Le niveau minimum (23) correspond à la base des sorties d'effluents. Les sorties d'effluents se répartissent sur la périphérie de la section de tube (16) et sont raccordées aux drains d'épandage (8). Les drains d'épandages (8) sont parallèles les uns aux autres, la distance nécessaire pour relier chaque sortie d'effluent au drain correspondant n'est donc pas la même. Ainsi, la sortie d'évacuation (21) se situant dans l'axe de son drain a tendance à absorber une plus grande partie du flux au détriment des autres. A cet effet, l'invention met en oeuvre un dispositif de limitation du débit dans les sortes d'effluents. Plus la distance entre la sortie d'effluent et son drain correspondant est faible, plus la section de la sortie d'effluent est réduite. Selon un mode de réalisation de l'invention le dispositif de limitation de débit est constitué par des plaques (22) venant obturer une partie de la section de la sortie d'effluent tel que représenté sur les figures 5. La figure SA représente la sortie d'effluent (21) alignée avec le drain correspondant, la figure 5B, avec la sortie d'effluent (20) légèrement décalée, la figure 5C avec la sortie d'effluent perpendiculaire au drain. On s'aperçoit donc que plus la sortie est alignée avec le drain, plus la section de sortie doit être réduite. A titre d'exemple la sortie la plus alignée avec le drain sera obturée sur 4/5 de sa section, plus on s'écarte de l'alignement avec le drain, plus cette valeur diminue. Cette valeur dépend du nombre d'orifices de sortie et donc de leur décalage angulaire par rapport à l'axe des drains. Les plaques (22) peuvent être fixées par rivetage par exemple et réglées lors de l'installation de la station mais elles peuvent être également montées réglables afin de compenser des déséquilibres se produisant au cours du temps. Dans le cas représenté sur la figure 3, la sortie d'effluents (18) la plus décalée par rapport au drain ne porte pas de plaque de réduction de section.

L'épuration des effluents nécessite le développement de microbes aérobies dans les drains d'épandages et dans la masse filtrante. Afin de permettre le passage d'air nécessaire au développement de ces microbes, les plaques (22) peuvent être dotées d'une ouverture (24) réalisée au niveau de la partie supérieure des sorties d'effluents. Des aérations du regard de répartition vers la surface peuvent également êtres mises en places.

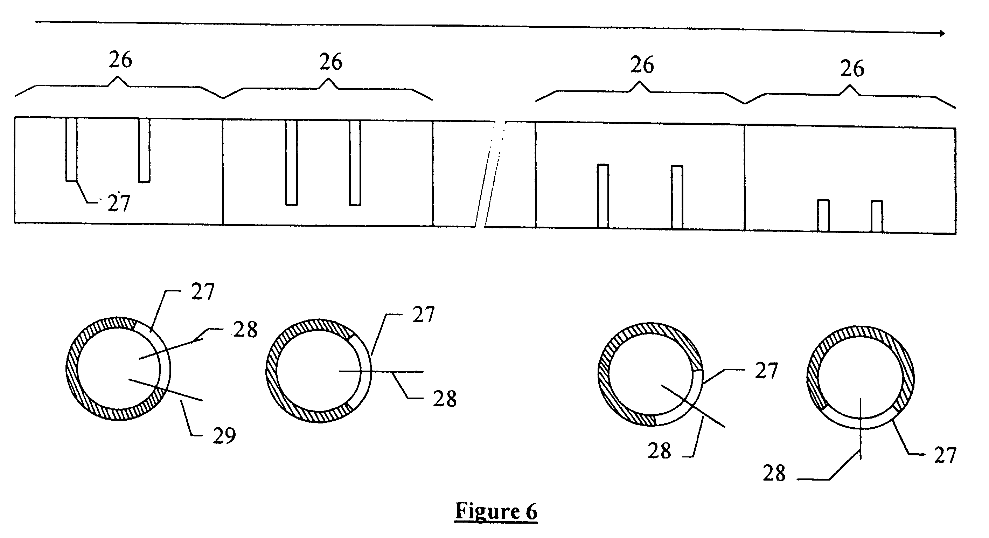

Le réseau d'épandage supérieur (7) est constitué de drains (8) parallèles les uns aux autres. Ces drains sont généralement constitués par des sections de tubes fendus (26) radialement selon un même axe tel que représenté sur la figure 6. Les longueurs des sections sont volontairement réduites sur le dessin pour bien faire apparaître le principe de montage des différentes sections. La flèche sur le dessin représente le sens d'écoulement du flux. Pour éviter que le flux ne se déverse sur les premiers mètres de drains, les sections de tube (26) sont agencées de façon à ce que les axes d'orientation des fentes (28), sections après sections soient progressivement inclinés vers le bas. Ainsi, plus le flux progresse plus il a de facilité à s'écouler, compensant ainsi les pertes de pression dues au flux qui s'est déjà écoulé. Grâce à cette disposition on obtient une répartition parfaitement homogène des effluents sur toute la longueur des drains. A titre d'exemple, la première section de tube est agencée telle que la partie inférieure (29) de la fente (27) (perpendiculaire à l'axe du tube) soit inclinée légèrement vers le bas par rapport à l'horizontale. Cet axe s'incline progressivement vers le bas jusqu'à ce que l'axe d'orientation des fentes (28) soit dans une position verticale correspondant à un écoulement maximum.

Il est également envisageable que fabriquer des tubes dont l'axe d'orientation des fentes, sur une même section, s'incline progressivement vers le bas.

Les effluents traversent alors la masse filtrant où ils sont épurés puis sont récupérés par le réseau de collecte inférieur (9).

## Revendications

1. Station d'épuration comprenant une masse filtrante située entre au moins un réseau de drainage supérieur (7) et un réseau de collecte inférieur (9), ledit réseau de drainage comprenant une conduite de chasse (2) amenant les effluents vers un regard de dérivation (3), pour répartir les effluents vers des branches d'évacuation (4 ou 4') qui se dirigent chacune vers un diviseur d'effluent (5) qui répartit équitablement le flux vers des regards de répartition (6) sur l'ensemble du réseau d'épandage supérieur (7) constitué de drains (8) parallèles les uns aux autres, station d'épuration **caractérisée en ce qu'**elle met en oeuvre au moins un regard de répartition (6) permettant une répartition homogène des flux depuis une arrivée d'effluent (17) vers plusieurs sorties d'effluents reliées chacune à un drain (8).

2. Station d'épuration selon la revendication 1 **caractérisée en ce que** le regard de répartition (6) est composé d'une section de tube (16), d'une arrivée d'effluents (17) constituée d'un coude plongeur et de plusieurs sorties d'effluents (18 à 21 et 18' à 20') répartis sur la périphérie de la section de tube (16) et raccordés aux drains d'épandage (8).

3. Station d'épuration selon la revendication 1 ou la revendication 2 **caractérisée en ce qu'**au moins une sortie d'effluent est dotée d'un dispositif de limitation de débit.

4. Station d'épuration selon la revendication 3 **caractérisée en ce que** le dispositif de limitation de débit est constitué d'une plaque (22) venant obturer une partie de la section de la sortie d'effluent.

5. Station d'épuration selon la revendication 4 **caractérisée en ce que** la plaque (22) est dotée d'une ouverture (24) réalisée au niveau de la partie supérieure de la sortie d'effluent permettant l'aération du réseau de drainage pour permettre le développement de microbes aérobies.

6. Station d'épuration selon la revendication 2 **caractérisée en ce que** le coude plongeur est doté d'une fente verticale (25) s'étendant au-dessus du niveau minimum (23).

7. Station d'épuration selon l'une des revendications précédentes **caractérisée en ce que** les drains d'épandage (8) sont dotés de fentes radiales, l'axe d'orientation (28) desdites fentes (27) étant progressivement incliné vers le bas dans le sens du flux.

8. Station d'épuration selon la revendication 7 **caractérisée en ce que** les drains (8) sont constitués par des sections de tubes fendus (26) radialement selon un même axe, agencées de façon à ce que l'axe d'orientation (28) des fentes (27), section après section dans le sens du flux, soit progressivement incliné vers le bas.

9. Station d'épuration selon la revendication 7 **caractérisée en ce que** sur une même section de tube, l'axe d'orientation (28) des fentes (27) s'incline progressivement vers le bas.

10. Station d'épuration selon l'une des revendications précédentes **caractérisée en ce qu'**elle met en oeuvre au moins un diviseur d'effluent constitué d'une branche d'arrivée et de deux branches de sortie, chaque branche de sortie ayant le même décalage angulaire par rapport à l'axe d'arrivée.

11. Station d'épuration selon la revendication 10 **caractérisée en ce qu'**elle met en oeuvre au moins un diviseur d'effluent (5) constitué de trois branches décalées angulairement de 120° les unes par rapport autres.

12. Station d'épuration selon l'une des revendications précédentes **caractérisée en ce qu'**elle met en oeuvre un regard de dérivation (3) comprenant une conduite de chasse (2), au moins deux orifices de sortie vers les branches d'évacuation (4) et (4') et au moins un tube d'obturation (14) déplaçable manuellement.

13. Station d'épuration selon la revendication 10 et la revendication 12 **caractérisée en ce que** les branches d'évacuation (4) et (4') présentent un coude (15) entre le regard de dérivation (3) et le diviseur d'effluent (5).

14. Station d'épuration selon la revendication 13 **caractérisée en ce que** les branches d'évacuation (4) et (4') présentent une section droite entre le coude (15) et le diviseur d'effluents (5) permettant de stabiliser le flux devenu turbulent en traversant le coude (15).

## Patentansprüche

1. Kläranlage mit einer Filtriermasse, die sich zwischen zumindest einem oberen Kanalnetz für die Entwässerung (7) und einem unteren Kanalnetz für die Sammlung (9) befindet, wobei das genannte Entwässerungsnetz eine Ablaufleitung (2) enthält, welche die Abwässer zum Kontrollschacht der Abzweigleitung (3) führt, um so die Abwässer auf die Zweige der Ableitung (4 oder 4') zu verteilen, die wiederum jeder zu einem Abwasserverteiler (5) führen, die den Abwasserstrom gleichmäßig auf die Verteilerkontrollschächte (6) auf dem gesamten Netz der oberen Abwasserverrieselung (7) verteilen, das aus zueinander parallel verlaufenden Sickerrohren (8) besteht, wobei sich diese Kläranlage dadurch kennzeichnet, dass zumindest ein Verteilkontrollschacht (6) eingesetzt wird, der die gleichmäßige Verteilung des Abwasserstroms von einem Abwasserzulauf (17) zu verschiedenen Abwasserabläufen ermöglicht, die jeweils an ein Sickerrohr (8) angeschlossen sind.

2. Kläranlage entsprechend Patentanspruch 1 **dadurch gekennzeichnet, dass** der Verteilkontrollschacht (6) sich zusammensetzt aus einem Rohrstück (16), einem Abwasserzulauf (17) bestehend aus einem nach unten ausgerichteten Winkelstück und mehreren Abwasserabläufen (18 bis 21 und 18' bis 20'), die über die Rohrfläche verteilt und an Sicherrohre (8) angeschlossen sind.

3. Kläranlage entsprechend Patentanspruch 1 oder Patentanspruch 2 **dadurch gekennzeichnet, dass** zumindest einer der Abwasserabläufe mit einer Vorrichtung zur Durchflussbegrenzung ausgerüstet ist.

4. Kläranlage entsprechend Patentanspruch 3 **dadurch gekennzeichnet, dass** die Vorrichtung zur Durchflussbegrenzung aus einer Platte (22) besteht, die einen Teil des Rohrabschnitt des Abwasserablaufes versperrt.

5. Kläranlage entsprechend Patentanspruch 4 **dadurch gekennzeichnet, dass** die Platte (22) über eine Öffnung (24) am oberen Teil des Abwasserablaufes verfügt, die es ermöglicht, das Entwässerungsnetz mit Sauerstoff für die Entwicklung der aeroben Mikroben zu versorgen.

6. Kläranlage entsprechend Patentanspruch 2 **dadurch gekennzeichnet, dass** das nach unten ausgerichtete Winkelstück mit einem vertikalen Spalt (25) versehen ist, der sich über das Mindestniveau (23) hinaus erstreckt.

7. Kläranlage entsprechend einem der vorstehenden Patentansprüche **dadurch gekennzeichnet, dass** die Sickerrohre (8) über radiale Spalten verfügen, wobei die Ausrichtungsachse (28) dieser Spalten (27) in Richtung des Abwasserstroms zunehmend nach unten hinten ausgerichtet ist.

8. Kläranlage entsprechend Patentanspruch 7 **dadurch gekennzeichnet, dass** die Sickerrohre (8) aus gespaltenen Rohrabschnitten (26) bestehen, wobei diese Spaltung radial entsprechend derselben Achse erfolgt und die Rohre so angeordnet sind, dass die Ausrichtungsachse (28) der Spalten (27), Rohrabschnitt für Rohrabschnitt, in Richtung des Abwasserstroms zunehmend nach unten hinten ausgerichtet ist.

9. Kläranlage entsprechend Patentanspruch 7 **dadurch gekennzeichnet, dass** auf einem Rohrabschnitt die Ausrichtungsachse (28) der Spalten (27) zunehmend nach unten hinten ausgerichtet ist.

10. Kläranlage entsprechend einem der vorstehenden Patentansprüche **dadurch gekennzeichnet, dass** zumindest ein Abwasserverteiler verwendet wird, der aus einer Zufuhrleitung und zwei Ablaufleitungen besteht, wobei jede diese Ablaufleitungen denselben Winkel in Bezug auf die Achse der Zufuhrleitung aufweist.

11. Kläranlage entsprechend dem Patentanspruch 10 **dadurch gekennzeichnet, dass** zumindest ein Abwasserverteiler (5) verwendet wird, der aus drei Abzweigungen besteht, die in einem Winkel von 120° zueinander angeordnet sind.

12. Kläranlage entsprechend einem der vorstehenden Patentansprüche **dadurch gekennzeichnet, dass** ein Kontrollschacht der Abzweigleitung (3), bestehend aus einer Ablaufleitung (2), mindestens zwei Öffnungen für den Ablauf zu den Zweige der Ableitung (4 oder 4') und mindestens einem manuell verstellbaren Verschlussrohr (14), eingesetzt wird.

13. Kläranlage entsprechend dem Patentanspruch 10 und dem Patentanspruch 12 **dadurch gekennzeichnet, dass** die Zweige der Ableitung (4) und (4') ein Winkelstück (15) zwischen dem Kontrollschacht der Abzweigleitung (3) und dem Abwasserverteiler (5) bilden.

14. Kläranlage entsprechend dem Patentanspruch 13 **dadurch gekennzeichnet, dass** die Zweige der Ableitung (4) und (4') einen geraden Abschnitt zwischen dem Winkelstück (15) und dem Abwasserverteiler (5) bilden, wodurch der beim Durchqueren des Winkelstücks (15) unruhig gewordene Abwasserstrom stabilisiert wird.

## Claims

1. Wastewater treatment plant including a filter mass located between at least one upper drainage network (7) and a lower water collection network (9), which drainage network including a scour pipe (2) brings effluents to a bypass manhole (3) to distribute the effluents to the evacuation branches (4 or 4') that are each directed to an effluent divider (5) that evenly distributes the flows towards the distribution manholes (6) over the entire upper surface spreading network (7) comprising drains (8) all parallel to each other, wastewater treatment plant **characterised by** the fact that it implements at least one distribution manhole (6) allowing for an even distribution of flows from the effluent inlet (17) towards several effluent outlets each linked to a drain (8).

2. Wastewater treatment plant in accordance with claim 1 **characterised by** the fact that the distribution manhole (6) comprises a tube section (16), an effluent inlet (17) comprising a plunger bend and several effluent outlets (18 to 21 and 18' to 20') distributed over the periphery of the tube section (16) and connected to the spreading drains (8).

3. Wastewater treatment plant in accordance with claim 1 or claim 2 **characterised by** the fact that at least one effluent outlet is provided with a flow limiter device.

4. Wastewater treatment plant in accordance with claim 3 **characterised by** the fact that the flow limiter device comprises a plate (22) blocking off a part of the effluent outlet section.

5. Wastewater treatment plant in accordance with claim 4 **characterised by** the fact that the plate (22) is provided with an opening (24) made in the upper part of the effluent outlet allowing for aeration of the drainage network to allow for the development of aerobic bacteria.

6. Wastewater treatment plant in accordance with claim 2 **characterised by** the fact that the plunger bend is provided with a vertical slit (25) spreading above the minimum level (23).

7. Wastewater treatment plant in accordance with one of the previous claims **characterised by** the fact that the spreading drains (8) are provided with radial slits, with the orientation axis (28) of the said slits (27) being gradually tilted downwards in the direction of flow.

8. Wastewater treatment plant in accordance with claim 7 **characterised by** the fact that the drains (8) comprise tube sections (26) spilt radially along the same axis, arranged so that the orientation axis (28) of the slits (27), section after section in the direction of flow, is gradually inclined downwards.

9. Wastewater treatment plant in accordance with claim 7 **characterised by** the fact that on the same section of tube, the orientation axis (28) of the slits (27) tilts gradually downwards.

10. Wastewater treatment plant in accordance with one of the previous claims **characterised by** the fact that it implements at least one effluent divider comprising an inlet branch and two outlet branches, each outlet branch having the same angular offset in relation to the inlet axis.

11. Wastewater treatment plant in accordance with claim 10 **characterised by** the fact that it implements at least one effluent divider (5) comprising three branches offset by an angle of 120° in relation to each other.

12. Wastewater treatment plant in accordance with one of the previous claims **characterised by** the fact that it implements a bypass manhole (3) including a scour pipe (2), at least two outlet holes to the evacuation branches (4) and (4') and at least one manually movable plugging tube (14).

13. Wastewater treatment plant in accordance with claim 10 and claim 12 **characterised by** the fact that the evacuation branches (4) and (4') have a bend (15) between the bypass manhole (3) and the effluent divider (5).

14. Wastewater treatment plant in accordance with claim 13 **characterised by** the fact that the evacuation branches (4) and (4')have a straight section between the bend (15) and the effluent divider (5) so the flow, that has become turbulent as it passes through the bend (15), can be stabilised.
